# EUROPEAN PATENT APPLICATION

(11) **EP 3 663 205 A1**
(43) Date of publication of application: **10.06.2020**
(21) Application number: 19213680.2
(22) Date of filing: 04.12.2019
(51) Int. Cl.: B64D 15/04, F02C 7/047, B64D 33/02

(54) **NACELLE INLET STRUCTURE**

(30) Priority: 04.12.2018 US 201816209087
(71) Applicant: Rohr, Inc., Chula Vista, CA 91910-2098 (US)
(72) Inventor: PETTY, Michael Sean, Jamul, CA 91935 (US); WARD, Stephen H., Chula Vista, CA 91910 (US)
(74) Representative: Dehns

(57) **Abstract**

A nacelle inlet structure for an engine includes a composite inlet lip defining a leading edge of a nacelle of the engine.

## Description

### BACKGROUND

### 1. Technical Field

This disclosure relates generally to aircraft gas turbine engine nacelles, and more particularly to nacelle inlet structures.

### 2. Background Information

An aircraft may include one or more engines mounted to the wings or another structure component of the aircraft. The engines are typically housed in a nacelle having an inlet structure configured to direct air into the engine. A typical concern in nacelle design is the reduction of nacelle weight (and correspondingly aircraft weight) while maintaining the structural strength of the nacelle.

Increasingly, anti-icing heating systems have been incorporated into nacelle inlet structures to prevent or reduce the formation of ice on the inlet lip skin (i.e., the leading edge) of the nacelle. However, increased temperatures in inlet structure components as a result of said anti-icing systems have led to the use of heavier, metallic inlet structure components. Metallic materials, such as aluminum, have been selected over lighter materials for their structural strength and resistance to increased temperatures. Additionally, conventional fastening means for mounting inlet structure components to one another may further add to nacelle weight.

### SUMMARY

According to an embodiment of the present disclosure, a nacelle inlet structure for an engine includes a composite inlet lip defining a leading edge of a nacelle of the engine.

In the alternative or additionally thereto, in the foregoing embodiment, the nacelle inlet structure further includes an outer barrel and a bulkhead. The outer barrel is disposed axially adjacent the composite inlet lip. The outer barrel forms an outer perimeter of the nacelle about a longitudinal axis. The bulkhead extends between an inner radial portion and an outer radial portion of the composite inlet lip to form an annular cavity between the bulkhead and the composite inlet lip about the longitudinal axis.

In the alternative or additionally thereto, in the foregoing embodiment, the nacelle inlet structure further includes an anti-icing assembly. At least a portion of the anti-icing assembly is disposed within the annular cavity.

In the alternative or additionally thereto, in the foregoing embodiment, the anti-icing assembly is configured to deliver heated gases to the annular cavity.

In the alternative or additionally thereto, in the foregoing embodiment, the anti-icing assembly extends through the bulkhead.

In the alternative or additionally thereto, in the foregoing embodiment, the composite inlet lip, the outer barrel, and the bulkhead are made from a same material.

In the alternative or additionally thereto, in the foregoing embodiment, the composite inlet lip is made from a polyimide composite material.

In the alternative or additionally thereto, in the foregoing embodiment, the nacelle inlet structure further includes an inner barrel disposed axially adjacent the composite inlet lip and radially inward of the outer barrel.

In the alternative or additionally thereto, in the foregoing embodiment, the composite inlet lip and the outer barrel form a continuous transition surface therebetween along an exterior surface of the nacelle.

According to another embodiment of the present disclosure, a nacelle inlet structure for a gas turbine engine includes a composite inlet lip, an outer barrel, a bulkhead, and an anti-icing assembly. The composite inlet lip includes an inner lip skin and an outer lip skin and defines a leading edge of a nacelle of the gas turbine engine. The outer barrel is disposed axially adjacent the composite inlet lip and forms an outer perimeter of the nacelle about a longitudinal axis. The bulkhead extends between the inner lip skin and the outer lip skin to form an annular cavity between the bulkhead and the composite inlet lip about the longitudinal axis. At least a portion of the anti-icing assembly is disposed within the annular cavity.

In the alternative or additionally thereto, in the foregoing embodiment, the anti-icing assembly is configured to deliver heated gases to the annular cavity.

In the alternative or additionally thereto, in the foregoing embodiment, the anti-icing assembly extends through the bulkhead

In the alternative or additionally thereto, in the foregoing embodiment, the composite inlet lip, the outer barrel, and the bulkhead are made from a same material.

In the alternative or additionally thereto, in the foregoing embodiment, the material is a polyimide composite material.

According to another embodiment of the present disclosure, a vehicle includes an engine having a nacelle and a nacelle inlet structure configured to direct air into the engine. The nacelle inlet structure includes a composite inlet lip defining a leading edge of a nacelle of the engine.

In the alternative or additionally thereto, in the foregoing embodiment, the nacelle inlet structure further includes an outer barrel and a bulkhead. The outer barrel is disposed axially adjacent the composite inlet lip. The outer barrel forms an outer perimeter of the nacelle about a longitudinal axis. The bulkhead extends between an inner radial portion and an outer radial portion of the composite inlet lip to form an annular cavity between the bulkhead and the composite inlet lip about the longitudinal axis.

In the alternative or additionally thereto, in the foregoing embodiment, the vehicle further includes an anti-icing assembly. At least a portion of the anti-icing assembly is disposed within the annular cavity.

In the alternative or additionally thereto, in the foregoing embodiment, the anti-icing assembly is configured to deliver heated gases to the annular cavity.

In the alternative or additionally thereto, in the foregoing embodiment, the composite inlet lip, the outer barrel, and the bulkhead are made from a same material.

In the alternative or additionally thereto, in the foregoing embodiment, the material is a polyimide composite material.

The present disclosure, and all its aspects, embodiments and advantages associated therewith will become more readily apparent in view of the detailed description provided below, including the accompanying drawings.

### BRIEF DESCRIPTION OF THE DRAWINGS

FIG. 1 is a perspective view of an aircraft including a gas turbine engine.
FIG. 2 is a side, cross-sectional view of a gas turbine engine.
FIG. 3 is a side, cross-sectional view of an exemplary nacelle inlet section for a gas turbine engine.
FIG. 4 is a side, cross-sectional view of an exemplary nacelle inlet section for a gas turbine engine.

### DETAILED DESCRIPTION

It is noted that various connections are set forth between elements in the following description and in the drawings. It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities.

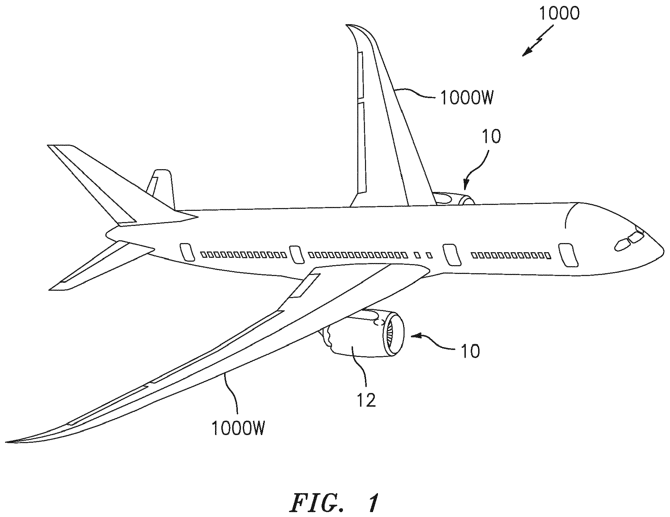

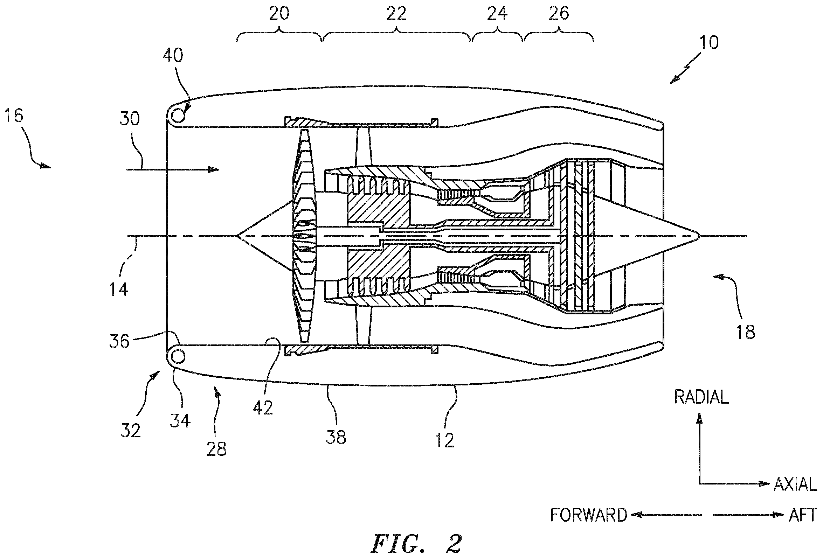

Referring to FIGS. 1 and 2, an aircraft 1000 includes a gas turbine engine 10 mounted to, for example, a wing 1000W of the aircraft 1000. The gas turbine engine 10 includes a nacelle 12 defining a housing of the gas turbine engine 10 about a longitudinal axis 14. The longitudinal axis 14 extends through the center of the gas turbine engine 10 between a forward end 16 and an aft end 18 of the gas turbine engine 10. The gas turbine engine 10 generally includes a fan section 20, a compressor section 22, a combustor section 24, and a turbine section 26. The gas turbine engine 10 may be configured as a high-bypass turbofan engine. Alternatively, the gas turbine engine may be configured as any other type of gas turbine engine capable of propelling a vehicle, such as aircraft 1000. Aspects of the disclosed embodiments are also applicable to other types of engines, for example, electric and hybrid engines.

Referring to FIGS. 2-4, the nacelle 12 includes an inlet structure 28 configured to direct air flow 30 toward the fan section 20. The inlet structure 28 includes an inlet lip 32 defining a leading edge (i.e., a forwardmost surface) of the nacelle 12. The inlet lip 32 has a generally U-shaped cross-sectional geometric extending annularly about the longitudinal axis 14. The inlet lip 32 includes an outer lip skin 34, defining a radially outward portion of the inlet lip 32, and an inner lip skin 36, defining a radially inward portion of the inlet lip 32. The inlet structure 28 further includes an outer barrel 38, a forward bulkhead 50, and an inner barrel 42. The inner lip skin 36 extends axially from a boundary with the outer lip skin 34 at the forwardmost end of the nacelle 12.

The inner barrel 42 and the outer barrel 38 are disposed axially adjacent the inlet lip 32 (e.g., directly aft of the inlet lip 32). Each of the inner barrel 42 and the outer barrel 38 extend in a generally longitudinal direction and may have a generally annular configuration about the longitudinal axis 14. The outer barrel 38 forms an outer perimeter of the nacelle 12 about the longitudinal axis 14. The inner barrel 42 is disposed radially inward of the outer barrel 38. The forward bulkhead 50 extends between the outer lip skin 34 and the inner lip skin 36 and has annular configuration about the longitudinal axis 14. While the term forward bulkhead 50 (or aft bulkhead 52) is used herein, it should be understood that the bulkheads, such as bulkheads 50, 52, may have any suitable orientation with respect to one another. Additionally, the forward bulkhead 50 or the aft bulkhead 52 may be more than one bulkhead.

The forward bulkhead 50 is configured with the inlet lip 32 to form an annular cavity 44 within the inlet lip 32. The cavity 44 extends (e.g., axially) between the inlet lip 32 and the forward bulkhead 50 and generally annularly about the longitudinal axis 14.

Because the inlet lip 32 is located at the forward end 16 of the nacelle 12, and therefore not heated directly by the gas turbine engine 10, the inlet lip 32 is prone to the accumulation of ice, especially along its forwardmost surface (i.e., the leading edge of the nacelle 12). In order to reduce and/or prevent the formation of ice on nacelle 12 surfaces, the gas turbine engine 10 includes an anti-icing assembly 40. As used herein, the term "anti-icing assembly" may refer to an assembly configured to prevent the formation of ice on nacelle 12 surfaces (i.e., an anti-icing assembly) and/or to an assembly configured to remove ice from nacelle 12 surfaces (i.e., a deicing assembly).

At least a portion of the anti-icing assembly 40 is disposed within the cavity 44. In some embodiments, the anti-icing assembly 40 may be configured to deliver heated gases from, for example, engine bleed air from the gas turbine engine 10, to the cavity 44. The anti-icing assembly 40 may include a distribution assembly 46 disposed within the cavity 44 and configured to direct heated gases to the inlet lip 32 to prevent and/or reduce the formation of ice on the inlet lip 32.

The distribution assembly 46 may be configured as a duct, a piccolo tube, a "swirl" anti-icing configuration, or any other suitable configuration for directing heated gases to inlet lip 32 surfaces. The distribution assembly 46 may be annularly arranged about the longitudinal axis 14 within the cavity 44. A duct 48 may direct heated gases from the gas turbine engine 10 (e.g., an engine build-up outlet of gas turbine engine 10) to the distribution assembly 46. The duct 48 may pass through one or more bulkheads, such as forward bulkhead 50 and aft bulkhead 52, between the heated gas source and the distribution assembly 46. In some embodiments, other configurations of the anti-icing assembly 40 may be used. For example, the anti-icing assembly 40 may be configured as an electric heating assembly disposed within the cavity 44 or any other assembly configured raise a temperature of the inlet lip 32 so as to prevent/reduce the formation of ice on the inlet lip 32.

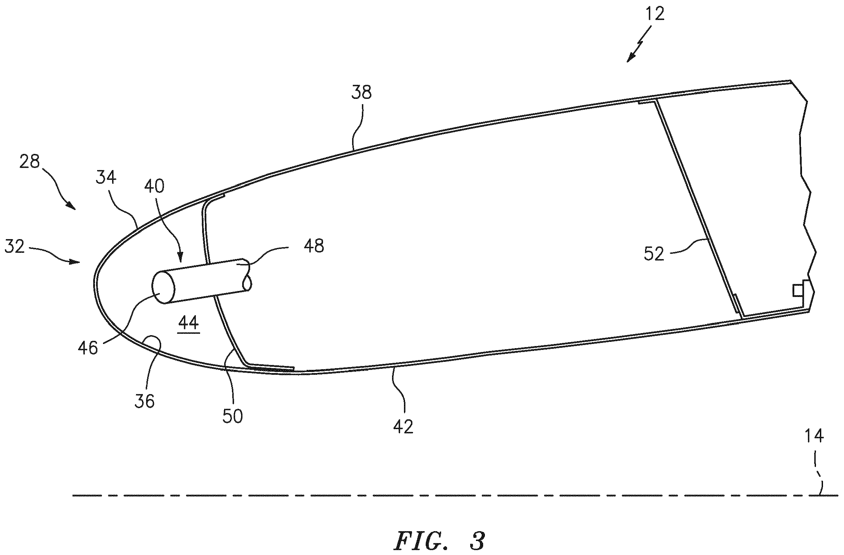

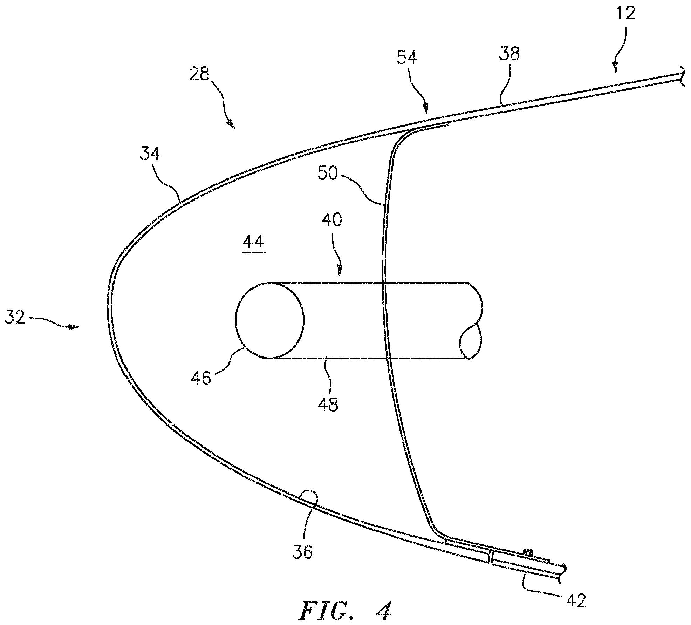

Referring to FIGS. 3 and 4, in the illustrated embodiment, the inlet lip 32 is formed from a composite material. Other components of the inlet structure 28, for example, the outer barrel 38 and the forward bulkhead 50, may be made from another suitable material. For example, the outer barrel 38 and the forward bulkhead 50 may be made from a lightweight metal material (e.g., aluminum, titanium, etc.). In some embodiments, the inlet lip 32, outer barrel 38, and forward bulkhead 50 may be made from a same material. For example, the inlet lip 32, outer barrel 38, and forward bulkhead 50 may be formed from a polyimide composite material, however, other composite materials having suitable structural strength and resistance to high temperatures may be used.

In some embodiments, components of the inlet structure 28, for example, at least the inlet lip 32, outer barrel 38, and forward bulkhead 50 may be configured as an integral (i.e., unitary) structure. As will be discussed in further detail, the inlet structure 28 may include additional integral components. Based on the integral configuration of the inlet structure 28, the use of fastening components (e.g., doublers, shimming, etc.) to join the components of the inlet structure 28 may not be necessary. The integral configuration of the inlet structure 28 may further provide a continuous transition surface 54 (i.e., a smooth transition surface having no gaps, protrusions, indentations, etc. therebetween) between inlet structure 28 components, for example, between the inlet lip 32 and the outer barrel 38 along an exterior surface of the nacelle 12.

The inlet structure 28 may integrally include other components of the gas turbine engine 10 as well. For example, the inner barrel 42 may be formed of a composite material and may additionally be configured integrally with the inlet structure 28 (see, e.g., FIG. 3).

It is noted that although the inlet structure 28 is described herein with respect to a gas turbine engine 10 of an aircraft 1000, in other aspects the inlet structure 28 may be used in any suitable industry. It is further noted that while the aircraft 1000 depicted in FIG. 1 is a fixed wing aircraft, in other aspects, the aircraft may be any other suitable vehicle.

While various aspects of the present disclosure have been disclosed, it will be apparent to those of ordinary skill in the art that many more embodiments and implementations are possible within the scope of the present disclosure. For example, the present disclosure as described herein includes several aspects and embodiments that include particular features. Although these particular features may be described individually, it is within the scope of the present disclosure that some or all of these features may be combined with any one of the aspects and remain within the scope of the present disclosure. Accordingly, the present disclosure is not to be restricted except in light of the attached claims and their equivalents.

## Claims

1. A nacelle inlet structure for an engine, comprising:
a composite inlet lip defining a leading edge of a nacelle of the engine.

2. The nacelle inlet structure of claim 1, further comprising:
an outer barrel disposed axially adjacent the composite inlet lip, the outer barrel forming an outer perimeter of the nacelle about a longitudinal axis; and
a bulkhead extending between an inner radial portion and an outer radial portion of the composite inlet lip to form an annular cavity between the bulkhead and the composite inlet lip about the longitudinal axis.

3. The nacelle inlet structure of claim 2, further comprising an anti-icing assembly, at least a portion of the anti-icing assembly disposed within the annular cavity.

4. The nacelle inlet structure of claim 1, and for a gas turbine engine, wherein the composite inlet lip comprises an inner lip skin and an outer lip skin, and the nacelle inlet structure further comprises:
an outer barrel disposed axially adjacent the composite inlet lip, the outer barrel forming an outer perimeter of the nacelle about a longitudinal axis;
a bulkhead extending between the inner lip skin and the outer lip skin to form an annular cavity between the bulkhead and the composite inlet lip about the longitudinal axis; and
an anti-icing assembly, at least a portion of the anti-icing assembly disposed within the annular cavity.

5. The nacelle inlet structure of claim 3 or 4, wherein the anti-icing assembly is configured to deliver heated gases to the annular cavity.

6. The nacelle inlet structure of claim 3, 4 or 5, wherein the anti-icing assembly extends through the bulkhead.

7. The nacelle inlet structure of any of claims 2-6, wherein the composite inlet lip, the outer barrel, and the bulkhead comprise the same material.

8. The nacelle inlet structure of claim 7, wherein the material is a polyimide composite material.

9. The nacelle inlet structure of any of claims 2-8, further comprising an inner barrel disposed axially adjacent the composite inlet lip and radially inward of the outer barrel.

10. The nacelle inlet structure of any of claims 2-9, wherein the composite inlet lip and the outer barrel form a continuous transition surface therebetween along an exterior surface of the nacelle.

11. The nacelle inlet structure of any preceding claim, wherein the composite inlet lip is made from a polyimide composite material.

12. A vehicle comprising:
an engine comprising a nacelle; and
the nacelle inlet structure of any preceding claim, and configured to direct air into the engine.
